# EUROPEAN PATENT SPECIFICATION

(11) **EP 1 226 094 B1**
(45) Date of publication and mention of the grant of the patent: **26.11.2003**
(21) Application number: 00953572.5
(22) Date of filing: 25.07.2000
(51) Int. Cl.: C02F 1/46, C02F 1/76

(54) **DEVICE FOR ELECTROLYSIS**
EINRICHTUNG FÜR DIE ELEKTROLYSE
DISPOSITIF POUR ELECTROLYSE

(30) Priority: 09.08.1999 NL 1012794
(43) Date of publication of application: 31.07.2002
(73) Proprietor: Tholen, Johannes, Petrus, Paulus, 1405 GX Bussum (NL)
(72) Inventor: Tholen, Johannes, Petrus, Paulus, 1405 GX Bussum (NL)
(74) Representative: De Hoop, Eric
(86) International application number: NL0000527
(87) International publication number: WO01017908

(56) References cited:
- FR-A- 2 196 201
- US-A- 4 089 768
- US-A- 4 272 686
- US-A- 5 228 964
- DATABASE WPI Section Ch, Week 199626 Derwent Publications Ltd., London, GB; Class D15, AN 1996-254316 XP002134125 & JP 08 103777 A (AMTEX KK), 23 April 1996 (1996-04-23)
- PATENT ABSTRACTS OF JAPAN vol. 1999, no. 05, 31 May 1999 (1999-05-31) & JP 11 037036 A (OGAWA YOSHIAKI), 9 February 1999 (1999-02-09)

## Description

The present invention relates to an electrolytic device for a water supply system, comprising an electrolytic cell which is provided with electrodes over which a voltage difference is applied. The invention further relates to a method for disinfecting a water supply system by electrolysis.

The use of electrolysis for disinfecting water is known. Usually sodium chloride (NaCl) is electrochemically converted into chlorine and caustic (as a by-product). The salt dissolves in water under forming of Na⁺- and Cl⁻-ions. When said solution is guided through an electrolytic cell, while a voltage is applied over the electrodes of said cell, chlorine (Cl₂), oxygen and hydrogen ions are formed at the anode and hydrogen and hydroxyl ions are formed at the cathode.

The chlorine formed at the anode may, depending on the pH, also be present as hypochlorous acid (HClO) or as a hypochlorite (ClO⁻). Dissolved chlorine, hypochlorous acid and hypochlorite are called "free chlorine" or "free active chlorine". When using (common) tap water having a pH of about 7 to 8 and containing a small concentration of NaCl, sodium hypochlorite, will be formed. The quantity of free chlorine to be formed will depend on the wanted concentration and the quantity of water to be treated.

Common equipment for disinfecting water consists of an electrolytic cell, a rectifier to convert mains voltage into direct current and a control to adapt the electric current to be supplied to the electrodes to the water flow rate.

US 5,228,964 discloses a chlorinating apparatus for use with a saltwater swimming pool having a pump for circulating the water between the swimmingpool and a filter, which apparatus comprises electricity generating means, driven by the flow of water produced by the pump, for providing an electrical output and electrode means connected with the electrical output of the electricity generating means for generating chlorine from the salt water. In one embodiment the housing of the apparatus is connected with the outlet of the pipe returning the water from the pump/filter to the pool. In another embodiment the apparatus is placed in a chamber containing the leafbasket of a conventional swimming pool, the bottom of the chamber being connected through a pipe with the pump/filter. The electricity generating means comprises a generator, such as a sealed dynamo, within the housing of the apparatus having a rotatable shaft on which is mounted an impeller. The electricity generating means may generate either AC or DC voltage. Typically the electrode means comprises a plurality of spaced mesh electrodes, such as alloy-coated titanium electrodes.

US patent 4,272,686 discloses an electrical power plant for generating electrical energy from the energy of a fluid flowing within a pipeline, comprising a turbine having a plurality of vanes, a flywheel for driving an electrical generator, a shaft connecting said turbine and said flywheel, a housing having a first chamber housing the turbine, a second chamber housing the flywheel and inlet and outlet openings. The plant may be provided with a second, smaller generator connected with an ozone generator placed in the second chamber for producing ozone to eliminate bacteria and to reduce odours within the second chamber.

JP-08103777A relates to a steriliser comprising a device connected to the water tap of service water and equipped with a turbine which is driven by the water flow from the nozzle of the service water tap, a direct current generator driven by the turbine, an ozone generator driven by the electric current produced by the generator and an ozone injector which injects ozone into the service water.

For several applications, for instance smaller water supply systems as used in residences, it is desirable to have a simple system at one's disposal which can be active on its own without being connected to the lighting mains. Disinfecting spring water in remote areas where no source of energy is present can also be named for example.

According to the invention the above mentioned need is met by an electrolytic device for disinfecting water in a water supply system comprising in one housing an electrolytic cell which is provided with electrodes over which a voltage difference is applied, which electrodes contact the water in the water supply system, a generator for supplying the voltage difference for the electrolytic cell, which generator is driven by the water in the water supply system, a water inlet opening to be connected to the water supply system,
characterised in that the device further comprises
a water outlet opening to be connected to the water supply system, and a variable resistance for adapting the voltage to be supplied to the electrodes to the properties of the water in the water supply system, wherein the electric current supplied by the generator is substantially proportional to the quantity of water flowing past the generator.

The invention further relates to a method for disinfecting water in a water supply system using the above described electrolytic device.

In this description water supply system means each pipe through which water is guided or in which water is present. Said pipe may for instance be a hot water pipe in a residence, but also a supply pipe for fresh or recycled water in a swimming pool.

In case the generator is of the type which supplies an electric current which is proportional to the quantity of water flowing past it, the generator, when the speed of flow increases and more water has to be disinfected, will supply more power so that more free chlorine is formed.

A suitable type of generator is a turbine, particularly a DC turbine.

By once adjusting the wanted voltage power with a variable resistance in the electric supply lead to the electrodes, the device can be adjusted to the conductance of the water. As the variations of the water composition in water supply systems are usually of a minor nature, it will in general not be necessary to adapt the adjustment for a long time.

The device of the invention therefore provides in its own need for power and is self adjusting.

When the water contains calcium and/or magnesium said elements may deposit on the electrodes in the form of their salts. A known method to prevent such a fouling of the electrodes, is to regularly reverse the polarity of the electrodes.

A very simple apparatus that can be built in against low costs, is obtained when the electrolytic cell and the generator, or at least its driving part, are accommodated in one housing.

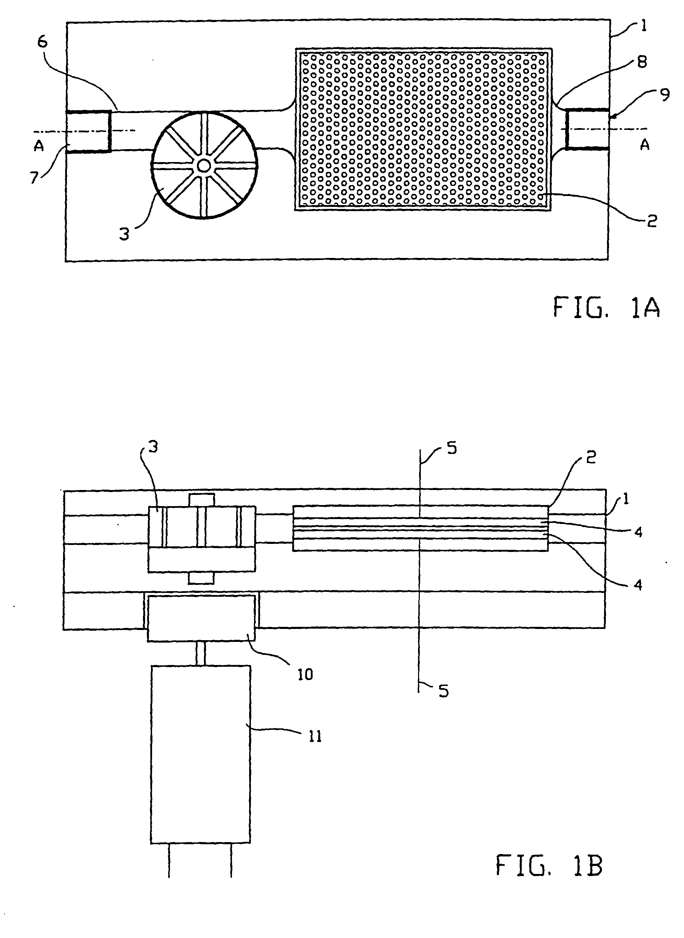

In the accompanying figure 1A a cross-section of a device according to the invention, in which the electrolytic cell and the driving part of the turbine are accommodated in one housing, is shown schematically. Figure 1 B schematically shows a cross-section of the device along line A-A in figure 1A.

In the figures, 1 refers to a housing, 2 refers to an electrolytic cell and 3 refers to a blade wheel of a turbine. In the electrolytic cell 2 a pair of electrodes 4 provided with lead wires 5 is arranged. A channel 6, in which the blade wheel 3 is placed, connects the electrolytic cell 2 with a water inlet opening 7 to be connected to the water supply system and a channel 8 connects the electrolytic cell 2 to a water outlet opening 9 to be connected to the water supply system. The blade wheel 3 is connected to a turbine 11 via a magnet coupling 10.

Such a system can be placed in all kinds of water supply systems, taking the possible water flow rates into account in order to determine the maximum capacity of the apparatus.

The device of the invention disinfects the water not only directly through anodic oxidation, but free chlorine is also produced so that a disinfecting action remains present. As a result the apparatus need not be installed directly near the location of use, but it may also be placed in the main supply system.

An example of a suitable electrode material is a stretch metal of titanium provided with a ruthenium or platinum coating. The stretch metal lets water through well, so that the electrodes can be placed transverse to the flow direction, optionally in the shape of a harmonica, so that the water contacts the electrodes several times. Any other commonly used suitable electrode material and any other commonly used suitable electrode shape, however, can also be used.

Because the conductance of the water to be treated is generally low, it will be necessary to place the electrodes as closely together as possible in order to obtain an acceptable current density between the electrodes. In order to prevent that as a result of deformation of the electrodes short-circuiting occurs a spacer, for instance made of a porous synthetic material such as PVDF gauze, can be arranged between the electrodes.

The concentration of free chlorine used for disinfecting water is usually between 0.1 and 1 ppm. At a low concentration of salt the quantity of free chlorine produced is approximately 1 g/Ah. At a water flow rate of 1000 l/h approximately 0.1 g chlorine/h will be necessary for obtaining a concentration of free chlorine of approximately 0.1 ppm, which corresponds to a current of approximately 0.1 A (at a voltage of about 3 V over the electrodes).

For water having a conductance of approximately 400 µS/cm (regular drinking water) a voltage of approximately 3 volt DC is needed for a current density of 0.5 A/dm². A cell for the treatment of 1000 l/h of water for which about 0.1 mg/l of free chlorine is wanted, only needs an electrode surface of about 20 cm² and requires a power of approximately 0.3 W.

It was found that a simple DC pump (for instance of the type Reich Tauchpumpe 12 VDC 12 l/m 0.5 bar) having an adapted pump housing and impeller at a flow rate of 10 l/min in a 12 mm pipe supplies a power of approximately 0.8 W, sufficient for a free chlorine content of 0.8 ppm.

In general the water to be treated contains sodium chloride and during electrolysis free chlorine will be created. However it has appeared that when the conductance is sufficient, also in the absence of chlorine active compounds are formed which can ensure disinfection.

## Claims

1. Electrolytic device for disinfecting water in a water supply system comprising in one housing
an electrolytic cell which is provided with electrodes over which a voltage difference is applied, which electrodes contact the water in the water supply system,
a generator for supplying the voltage difference for the electrolytic cell, which generator is driven by the water in the water supply system,
a water inlet opening to be connected to the water supply system,
**characterised in that** the device further comprises
a water outlet opening to be connected to the water supply system, and a
variable resistance for adapting the voltage to be supplied to the electrodes to the properties of the water in the water supply
system, wherein the electric current supplied by the generator is substantially proportional to the quantity of water flowing past the generator.

2. Electrolytic device according to claim 1, in which the generator is a turbine.

3. Electrolytic device according to claim 2, in which the turbine is a DC turbine.

4. Electrolytic system according to any one of the preceding claims, which is provided with means for periodically reversing the polarity of the electrodes.

5. Method for disinfecting water in a water supply system comprising passing the water through an electrolytic device comprising in one housing
an electrolytic cell which is provided with electrodes over which a voltage difference is applied, which electrodes contact the water in the water supply system,
a generator for supplying the voltage difference for the electrolytic cell, which generator is driven by the water in the water supply system,
a water inlet opening to be connected to the water supply system,
**characterised in that** the device further comprises
a water outlet opening to be connected to the water supply system, and a
variable resistance for adapting the voltage to be supplied to the electrodes to the properties of the water in the water supply system, wherein the electric current supplied by the generator is substantially proportional to the quantity of water flowing past the generator.

6. A method according to claim 5, in which the generator is a turbine.

7. A method according to claim 6, in which the turbine is a DC turbine.

8. A method according to any one of claims 5-7, in which the electrolytic device is provided with means for periodically reversing the polarity of the electrodes.

## Patentansprüche

1. Elektrolysevorrichtung zum Desinfektieren von Wasser in einem Wasserleitungssystem, umfassend in einem Gehäuse:
eine Elektrolysezelle, mit Elektroden versehen, über welche Elektroden eine Spannungsdifferenz angelegt wird, welche Elektroden mit dem Wasser in dem Wasserleitungssystem Kontakt haben,
einen Generator zum Liefern der Spannungsdifferenz für die Elektrolysezelle, welcher Generator durch das Wasser in dem Wasserleitungssystem angetrieben wird,
eine Wassereinlaßöffnung, die mit dem Wasserleitungssystem verbunden werden soll,
**dadurch gekennzeichnet, daß** die Vorrichtung weiter umfaßt
eine Wasserauslaßöffnung, die mit dem Wasserleitungssystem verbunden werden soll, und einen
veränderlichen Widerstand um die an die Elektroden zu liefernde Spannung an die Eigenschaften des Wassers in dem Wasserleitungssystem anzupassen, wobei der durch den Generator gelieferte elektrische Strom hauptsächlich proportional zu der entlang des Generators fließenden Wassermenge ist.

2. Elektrolysevorrichtung nach Anspruch 1, wobei der Generator eine Turbine ist.

3. Elektrolysevorrichtung nach Anspruch 2, wobei die Turbine eine Gleichstromturbine ist.

4. Elektrolysesystem nach einem der vorhergehenden Ansprüche, welcher mit Mitteln zum periodisch Umpolarisieren der Elektroden versehen ist.

5. Verfahren zum Desinfizieren von Wasser in einem Wasserleitungssystem, umfassend das Führen von Wasser durch eine Elektrolysevorrichtung umfassend in einem Gehäuse eine Elektrolysezelle mit Elektroden versehen, über welche Elektroden eine Spannungsdifferenz angelegt wird, welche Elektroden mit dem Wasser in dem Wasserleitungssystem Kontakt haben, einen Generator zum Liefern der Spannungsdifferenz für die Elektrolysezelle, welcher Generator durch das Wasser in dem Wasserleitungssystem angetrieben wird,
eine Wassereinlaßöffnung, die mit dem Wasserleitungssystem verbunden werden soll,
**dadurch gekennzeichnet, daß** die Vorrichtung weiter umfaßt
eine Wasseraustaßöffnung, die mit dem Wasserleitungssystem verbunden werden soll, und einen
veränderlichen Widerstand um die an die Elektroden zu liefernde Spannung an die Eigenschaften des Wassers in dem Wasserleitungssystem anzupassen, wobei der durch den Generator gelieferte elektrische Strom hauptsächlich proportional zu der entlang des Generators fließenden Wassermenge ist.

6. Verfahren nach Anspruch 5, wobei der Generator eine Turbine ist.

7. Verfahren nach Anspruch 6, wobei die Turbine eine Gleichstromturbine ist.

8. Verfahren nach einem der Ansprüche 5-7, wobei die Elektrolysevorrichtung mit Mitteln zum periodisch Umpolarisieren der Elektroden versehen ist.

## Revendications

1. Dispositif électrolytique pour désinfecter l'eau d'un système d'approvisionnement en eau, comprenant, dans un boîtier,
une cellule électrolytique qui est pourvue d'électrodes sur lesquelles une différence de tension est appliquée, lesdites électrodes étant en contact avec l'eau dans le système d'approvisionnement en eau,
un générateur pour fournir la différence de tension pour la cellule électrolytique, ledit générateur étant entraîné par l'eau dans le système d'approvisionnement en eau,
un orifice d'entrée de l'eau, devant être raccordé au système d'approvisionnement en eau,
**caractérisé en ce que** le dispositif comprend en plus
un orifice de sortie de l'eau, devant être raccordé au système d'approvisionnement en eau, et
une résistance variable pour adapter la tension devant être fournie aux électrodes aux propriétés de l'eau dans le système d'approvisionnement en eau, le courant électrique fourni par le générateur étant essentiellement proportionnel à la quantité d'eau qui passe devant le générateur.

2. Dispositif électrolytique selon la revendication 1, dans lequel le générateur est une turbine.

3. Dispositif électrolytique selon la revendication 2, dans lequel la turbine est une turbine C.C.

4. Système électrolytique selon l'une quelconque des revendications précédentes, qui est pourvu de moyens pour inverser périodiquement la polarité des électrodes.

5. Procédé pour désinfecter l'eau d'un système d'approvisionnement en eau, comprenant le passage de l'eau à travers un dispositif électrolytique comprenant, dans un boîtier,
une cellule électrolytique qui est pourvue d'électrodes sur lesquelles une différence de tension est appliquée, lesdites électrodes étant en contact avec l'eau dans le système d'approvisionnement en eau,
un générateur pour fournir la différence de tension pour la cellule électrolytique, ledit générateur étant entraîné par l'eau dans le système d'approvisionnement en eau,
un orifice d'entrée de l'eau, devant être raccordé au système d'approvisionnement en eau,
**caractérisé en ce que** le dispositif comprend en plus
un orifice de sortie de l'eau, devant être raccordé au système d'approvisionnement en eau, et
une résistance variable pour adapter la tension devant être fournie aux électrodes aux propriétés de l'eau dans le système d'approvisionnement en eau, le courant électrique fourni par le générateur étant essentiellement proportionnel à la quantité d'eau qui passe devant le générateur.

6. Procédé selon la revendication 5, dans lequel le générateur est une turbine.

7. Procédé selon la revendication 6, dans lequel la turbine est une turbine C.C.

8. Procédé selon l'une quelconque des revendications 5 à 7, dans lequel le dispositif électrolytique est pourvu de moyens pour inverser périodiquement la polarité des électrodes.
